Europäisches Patentamt

European Patent Office

Office européen des brevets

(11) Veröffentlichungsnummer: **0 371 953 A2**

(12) **EUROPÄISCHE PATENTANMELDUNG**

(21) Anmeldenummer: **89890266.3**

(22) Anmeldetag: **10.10.89**

(51) Int. Cl.5: **G01N 21/75, G01N 21/01**

(30) Priorität: **01.12.88 AT 2958/88**

(43) Veröffentlichungstag der Anmeldung:
**06.06.90 Patentblatt 90/23**

(84) Benannte Vertragsstaaten:
**CH DE GB LI**

(71) Anmelder: **AVL Medical Instruments AG**
**Stettemerstrasse 28**
**CH-8207 Schaffhausen(CH)**

(72) Erfinder: **Karpf, Hellfried, Dr.**
**Leechgasse 78**
**A-8010 Graz(AT)**
Erfinder: **Offenbacher, Helmut, Dr.**
**Steinfeldgasse 2**
**A-8020 Graz(AT)**
Erfinder: **Kleinhappl, Erich, Ing.**
**Schöckelblickstrasse 26**
**A-8044 Graz(AT)**
Erfinder: **Marsoner, Hermann, Dipl.-Ing.Dr.**
**Roseggersiedlung 2**
**A-8153 Steinberg(AT)**
Erfinder: **Jöbstl, Ewald**
**Rosenberggürtel 37/14**
**A-8010 Graz(AT)**

(74) Vertreter: **Krause, Walter, Dr. Dipl.-Ing. et al**
**Postfach 200 Singerstrasse 8**
**A-1014 Wien(AT)**

(54) **Vorrichtung zur Messung chemischer und physikalischer Parameter eines flüssigen oder gasförmigen Mediums.**

(57) Zur Verkleinerung des Meßvolumens bei einer Vorrichtung zur Messung chemischer und physikalischer Parameter flüssiger oder gasförmiger Medien mit optischen Sensorelementen (Optoden) deren Optoden problemlos ausgewechselt werden können, wird vorgeschlagen, daß ein in eine Halterung (1) der Vorrichtung einsetzbarer Meßkammerteil (2) mit einem Probenkanal (4) vorgesehen ist, welcher über Kapillarbohrungen (7) an Probenzu- und Ableitungen (8, 9) ankoppelbar ist, daß der Meßkammerteil (2) einen den Probenkanal (4) an einer Seite begrenzenden Sensorträger (6) aufnimmt, welcher Bohrungen (13, 14, 15) zur Aufnahme der Optoden (10, 11, 12) aufweist, sowie daß die Indikatorschichte jeder einzelnen Optode (10,11,12) in der dem Probenkanal (4) zugewandten Fläche (16) des Sensorträgers (6) liegt.

Fig. 1

## Vorrichtung zur Messung chemischer und physikalischer Parameter eines flüssigen oder gasförmigen Mediums

Die Erfindung betrifft eine Vorrichtung zur Messung chemischer und physikalischer Parameter eines flüssigen oder gasförmigen Mediums mit zumindest einem mit dem Medium in Kontakt stehenden optischen Sensorelement (Optode), mit Einrichtungen zur optischen Anregung der Indikatorschicht der Optode sowie zur Erfassung und Auswertung der von den zu messenden Parametern abhängigen optischen Signale.

Bereits seit längerem sind optische Sensorelemente, sogenannte Optoden, bekannt geworden, welche sich in vielen Einsatzgebieten, vor allem in der medizinischen Analytik sowie in der Biotechnologie immer größerer Beliebtheit erfreuen.

So ist beispielsweise aus der EP-A-0 109 959 ein Sensorelement zur Bestimmung des $O_2$-Gehaltes einer Probe bekannt geworden, dessen unterste einer Beleuchtungs- und Lichtmeßeinrichtung zugeordnete Schicht ein Trägerelement aus Glas ist. Die mittlere Schicht ist eine Polymerschicht, die in molekularer Verteilung die fluoreszierende Indikatorsubstanz derart enthält, daß ein vom Sauerstoffgehalt des Probenmaterials abhängiges Fluoreszenzsignal meßbar ist. Ober der Polymerschicht liegt eine dem Probenmaterial zugewandte optische Isolationsschicht. Die Polymerschicht und die Isolationsschicht sind durch Polymerisation homogen miteinander verbunden und bestehen aus einem für Sauerstoff gut durchlässigem Polymermaterial. Die Polymerschicht, vorzugsweise ein ausgehärtetes Siliconpolymer, enthält die Indikatorsubstanz in solubilisierter Form. Bevorzugt werden dabei polyzyklische, homo- oder heterozyklische aromatische Moleküle, beispielsweise polyzyklische aromatische Kohlenwasserstoffe mit Fluoreszenzabklingzeiten größer 5 ns, als Indikatorsubstanzen verwendet. Auf eine entsprechende Vor richtung zum praktischen, labormäßigen Einsatz dieser Optode wird in dieser Schrift jedoch nicht näher eingegangen.

Des weiteren ist aus der EP-A-105 870 eine Meßeinrichtung zur Bestimmung des $CO_2$-Gehaltes einer Probe bekannt, welche einen pH-abhängigen Fluoreszenzfarbstoff als Indikatorsubstanz aufweist, der in wäßriger Lösung in einer protonendichten, gasdurchlässigen Polymermembran eingebettet ist. Die wäßrige Indikatorlösung ist hier in Form von Tröpfchen in der Größenordnung von 0,1 bis 100 μm in gleichmäßiger Verteilung in der Polymerschicht, beispielsweise in Silicon-Kautschuk eingebettet. Die Polymermembran mit der tröpfchenförmigen Indikatorlösung (Mizellen) wird auf die glatte Oberfläche eines transparenten Trägerelementes aufvulkanisiert bzw. aufpolymerisiert.

Schließlich wird in (4A 1033/87) ein pH-Sensor beschrieben, dessen sensitive Schicht von einer hydrophilen, ionenpermeablen Polymermembran, beispielsweise aus regenerierter Cellulose, abgedeckt ist. Zur Unterdrückung von Fehllicht enthält diese Polymermembran reduktiv oder reduktivzementativ abgeschiedene Edelmetallpigmente. Aufgrund der schlechten Klebbarkeit der Polymermembran wird diese mechanisch in nicht näher bezeichneter Weise geklemmt. Auch hier wird im wesentlichen nur der eigentliche Sensor, dessen Herstellung sowie das Meßprinzip an sich beschrieben, eine praktisch einsetzbare Meßvorrichtung mit optischen Sensoren der oben beschriebenen Art ist hier nicht geoffenbart.

Ausgehend vom zitierten Stand der Technik, stellt sich der Erfindung die Aufgabe, eine Meßvorrichtung mit zumindest einem optischen Sensorelement vorzuschlagen, welche mit einem minimalen Meßvolumen das Auslangen findet und bei welcher die optischen Sensorelemente unproblematisch ausgewechselt werden können, wobei die optischen Kontakte zu den Sensorelementen sowie der gasdichte Kontakt zum Probenmedium einfach hergestellt werden kann.

Diese Aufgabe wird erfindungsgemäß dadurch gelöst, daß ein in eine Halterung der Vorrichtung einsetzbarer Meßkammerteil mit einem Probenkanal vorgesehen ist, welcher über Kapillarbohrungen an Probenzu- und Ableitungen ankoppelbar ist, daß der Meß kammerteil einen den Probenkanal an einer Seite begrenzenden Sensorträger aufnimmt, welcher Bohrungen zur Aufnahme der Optoden aufweist, sowie daß die Indikatorschichte jeder einzelnen Optode in der dem Probenkanal zugewandten Fläche des Sensorträgers liegt. Vorteilhafterweise ist der gesamte Meßkammerteil mit dem Probenkanal und den im Sensorträger angeordneten Optoden als Einheit auswechselbar. Nach dem Einsetzen des Meßkammerteils in die Halterung der Vorrichtung, wird dieser zentriert und über Kapillarbohrungen an die Probenzu- und Ableitungen des Analysengerätes angekoppelt. Ein einfaches Auswechseln bei Verschmutzung einzelner Sensorelemente bzw. bei Erreichen der zulässigen Lebensdauer eines Sensors ist dadurch möglich.

Zur Vereinfachung der optischen Ankoppelung des Meßkammerteils ist in einer Weiterbildung der Erfindung vorgesehen, daß die einzelnen Optoden in den Bohrungen des Sensorträgers angeordnete, optisch durchlässige Trägerelemente aufweisen, welche mit der vom Probenkanal abgewandten Fläche des Sensorträgers plan abschließen, sowie daß ein Lichtleiterhalter vorgesehen ist, welcher optische Anschlüsse, vorzugsweise zweiarmige Lichtleiter, für jede Optode aufweist, wobei die Enden der Lichtleiter in einer mit dem Sensorträger in Kontakt bringbaren plan geschliffenen Platte liegen.

Eine besonders komfortable Ausgestaltung ist erfindungsgemäß dadurch gegeben, daß die Halterung ein mit der Probenableitung in Verbindung stehendes federbelastetes Anschlußelement aufweist, welches den Meßkammerteil zentrierend an ein mit der Probenzuleitung verbundenes Anschlußelement preßt, wobei zwischen den Anschlußelementen und den mit dem Probenkanal verbundenen Kapillarbohrungen Dichtelemente angeordnet sind und das federbelastete Anschlußelement einen Druckhebel zu dessen Entriegelung aufweist. Die erfindungsgemäße Funktion sei wie folgt beschrieben: Der Meßkammerteil wird senkrecht in die dafür vorgesehene Öffnung der Halterung eingesetzt und mit leichtem Druck gegen die Anschlußelemente eingerastet. Während des Einrastvorganges weicht das federbelastete Anschlußelement gegen die Kraft der Feder aus, bis eine dem Meßkammerteil zugekehrte Zentriernase des Anschlußelementes in die dafür vor gesehene Ausnehmung des Meßkammerteils einrasten kann. Die Entnahme des Meßkammerelementes erfolgt dadurch, daß auf einen Druckhebel der Halterung gedrückt wird, wodurch das federbelastete Anschlußelement wiederum gegen die Feder verschoben wird, bis die Zentriernase des Anschlußelementes aus der dafür vorgesehenen Ausnehmung ausrastet und in der Folge den Meßkammerteil freigibt.

Der dichte Verbund der Kapillarbohrungen des Meßkammerteils mit dem übrigen Probenweg erfolgt dadurch, daß die Anschlußelemente durch die Feder gegen die dafür vorgesehenen Ausnehmungen im Meßkammerteil gedrückt werden, wobei in diesen Ausnehmungen Dichtelemente, vorzugsweise Quartringe, angeordnet sind.

Der Sensorträger soll eine hohe chemische Resistenz gegen alle möglichen Probenbestandteile aufweisen, sowie Bohrungen für die einzelnen Optoden mit geringsten Toleranzen zulassen und zudem auch ein guter Wärmeleiter sein. Es ist deshalb von Vorteil, wenn erfindungsgemäß der Sensorträger aus einer korrosionsfesten Metallscheibe, vorzugsweise aus einer eloxierten Aluminiumscheibe, besteht, bei welcher die Bohrungen für die Optoden entlang des Durchmessers der Metallscheibe aufgereiht sind und die Optoden, vorzugsweise zur Messung des pH-, des $pO_2$- sowie des $pCO_2$-Wertes, in diese Bohrungen eingeklebt sind.

Um das Einkleben der Optoden in den Sensorträger zu erleichtern, insbesondere um ein Austreten von Kleber an der der Probe zugewandten Seite des Sensorträgers zu vermeiden, ist vorgesehen, daß zwischen den einzelnen Optoden und den Bohrungen im Sensorträger ein mit Kleber zu füllender Kapillarspalt ausgebildet ist, wobei zum Einbringen des Klebers am Rand jeder Bohrung zumindest eine knapp vor der dem Probenkanal zugewandten Fläche des Sensorträgers endende nutförmige Erweiterung vorgesehen ist.

Die pH-Optode weist erfindungsgemäß eine das optisch durchlässige Trägerelement umfassende Hülse auf, welche in einer Umfangsnut eine elastische Fixierung für eine den aktiven Bereich der pH-Optode abdeckende, proteinimpermeable Membran, vorzugsweise aus regenerierter Cellulose, trägt, wobei der Kapillarspalt zwischen Hülse und Bohrung im Sensorträger mit Kleber gefüllt ist. Um Probleme beim Kleben der quellbaren, proteinimpermeablen Membran der pH-Optode zu vermeiden, wird hier das optisch durchlässige Trägerelement mit einer Hülse versehen, welche die Membran in einer Umfangsnut, vorzugsweise mittels eines O-Ringes, elastisch fixiert.

Entsprechend einer vorteilhaften Weiterbildung der Erfindung besteht die Hülse aus Kunststoff, vorzugsweise aus einem Kunststoff mit Memory-Effekt, welcher auf das optisch durchlässige Trägerelement aufgeschrumpft ist.

Zur Verbesserung des Nutzsignals ist vorgesehen, daß die Hülse auf der dem Trägerelement zugewandten Mantelfläche mit einer dünnen Schicht bedeckt ist, deren Brechungsindex niedriger ist als jener des Trägerelementes.

Ein wichtiges Kriterium für alle Analysen ist die Blasenfreiheit der Probe im Probenkanal. Es sollte auch möglich sein, Verunreinigungen der Sensoren sowie den Füllgrad des Probenkanals zu kontrollieren. Dies wird durch eine vorteilhafte Ausgestaltung der Erfindung möglich, in welcher der Meßkammerteil aus optisch durchlässigem Material, vorzugsweise aus Plexiglas, besteht, sowie ein in der Halterung des Meßkammerteils geführter Lichtleiter zur Ausleuchtung des Probenkanals vorgesehen ist. Über eine externe Beleuchtungsquelle kann damit Licht beliebiger Wellenlänge in den transparenten Meßkammerteil eingestrahlt werden, wobei aufgrund der unterschiedlichen Brechungsindizes der Probe, der Wände des Probenkanals und allfälliger Verunreinigungen oder Luftblasen eine ausgezeichnete optische Kontrolle möglich ist.

Ein weiterer Vorteil der erfindungsgemäßen Vorrichtung liegt darin, daß der Lichtleiterhalter zumindest ein Heizelement und ein Thermoelement zur Thermostatisierung des mit dem Lichtleiterhalter in Kontakt stehenden Sensorträgers aufweist.

Für die optische Ankoppelung des Meßkammerteils ist weiters vorgesehen, daß der Lichtleiterhalter eine in einem Gehäuse geführte Lichtleiterhülse zur Aufnahme der einzelnen Lichtlei ter aufweist, welche an ihrer Stirnseite die mit dem Sensorträger in Kontakt bringbare plan geschliffene Platte aufweist, wobei die Lichtleiterhülse durch die Kraft einer sich am Gehäuse abstützenden Feder mit konstantem Druck am Sensorträger anliegt. Dadurch wird eine schonende, möglichst enge optische und thermische Ankoppelung der Stirnseite der Lichtleiterhülse an den Sensorträger garantiert.

Vorteile bei der Massenfertigung des Meßkammerteils, sowie eine Verringerung des für die Messung notwendigen Probenvolumens können erfindungsgemäß dadurch erreicht werden, daß der Probenkanal im Meßkammerteil als kapillarförmiger Spalt ausgebildet ist, welcher die Indikatorschicht jeder einzelnen Optode vollständig abdeckt, sowie daß die an den Probenkanal anschließenden Kapillarbohrungen außerhalb der Ebene des kapillarförmigen Spaltes liegen und mit diesem über kurze Stichbohrungen verbunden sind. Dies ist insbesondere dann von Vorteil, wenn der Sensorträger in den Meßkammerteil eingeklebt ist, da durch die spezielle Anordnung der Kapillarbohrungen ein Verstopfen durch Kleber ausgeschlossen wird.

Im Hinblick auf die Ausbildung einer vorteilhaften Probenströmung zur gleichmäßigen und vollständigen Befüllung des kapillarförmigen Spaltes ist vorgesehen, daß der in der Spaltebene liegende Einströmöffnungswinkel $\alpha$ des kapillarförmigen Spaltes zwischen $10°$ und $60°$, vorzugsweise zwischen $15°$ bis $25°$ und der Ausströmöffnungswinkel $\beta$ zwischen $10°$ und $90°$, vorzugsweise zwischen $30°$ und $60°$ liegt. Dabei kann das Probenvolumen weiter verringert werden, wenn entsprechend einer erfindungsgemäßen Ausgestaltung der kapillarförmige Spalt zwischen den einzelnen Optoden Einschnürungen in seiner Breite aufweist.

Schließlich kann dadurch, daß die Anströmung der einzelnen Optoden asymmetrisch erfolgt, für eine weitere Verbesserung der Probenströmung in der erfindungsgemäßen Vorrichtung gesorgt werden.

Die Erfindung wird im folgenden anhand von Zeichnungen näher erläutert.

Es zeigen:
Fig. 1 eine erfindungsgemäße Vorrichtung geschnitten nach der Linie I-I in Fig. 2,
Fig. 2 eine Draufsicht auf die Darstellung nach Fig. 1,
Fig. 3 ein Meßkammerteil der Vorrichtung nach Fig. 1 im Detail, geschnitten nach der Linie III-III in Fig. 4,
Fig. 4 eine Draufsicht auf die Darstellung nach Fig. 3,
Fig. 5 ein Detail aus Fig. 3,
Fig. 6 eine Draufsicht auf den Lichtleiterhalter der Vorrichtung nach Fig. 1, sowie die
Fig. 7 bis 9 verschiedene Ausführungsvarianten des Probenkanals eines Meßkammerteiles nach Fig. 3.

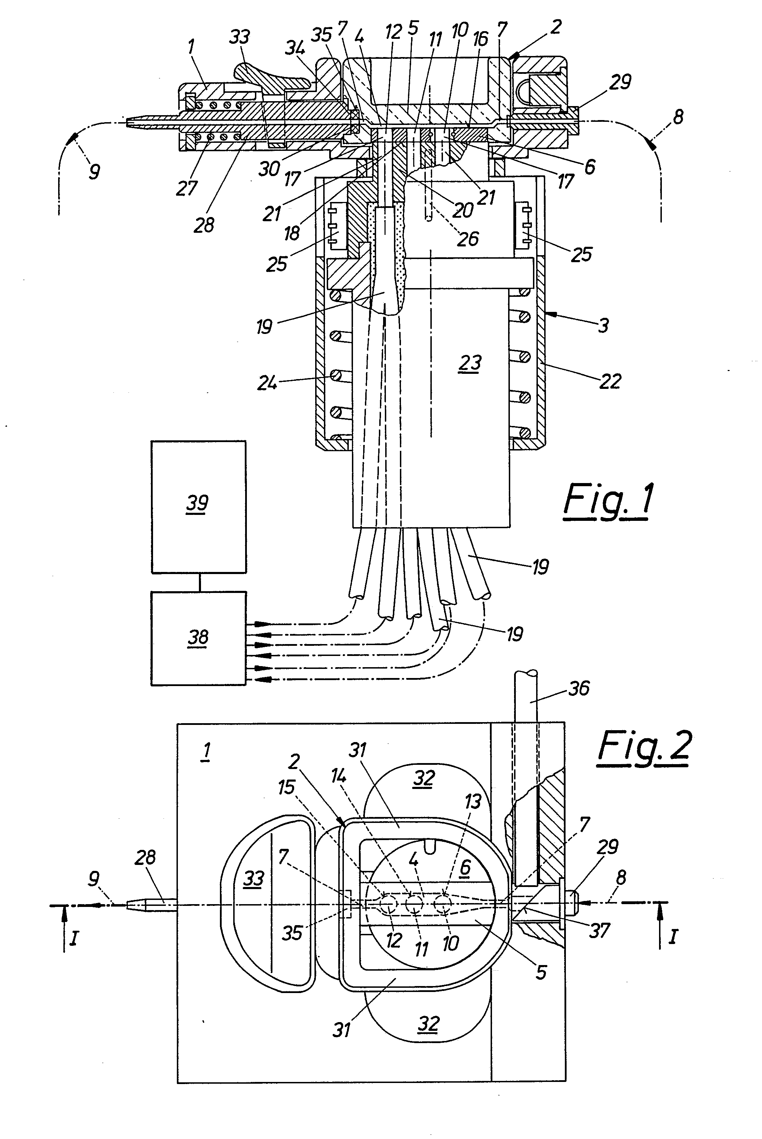

Die in Fig. 1 und 2 zum Teil schematisch dargestellte Meßvorrichtung besteht im wesentlichen aus einer Halterung 1, in welche der Meßkammerteil 2 einsetzbar ist, sowie aus einem Lichtleiterhalter 3 zur optischen Versorgung des Meßkammerteils 2.

Der als kapillarförmiger Spalt ausgeführte Probenkanal 4 wird auf einer Seite durch einen Steg 5 des Meßkammerteils 2 und auf der anderen Seite durch einen scheibenförmigen Sensorträger 6 begrenzt und ist über Kapillarbohrungen 7 an die Probenzuleitungen 8 bzw. die Probenableitung 9 angekoppelt. Die einzelnen Optoden 10, 11 und 12 sind derart in entsprechende Bohrungen 13, 14 15 des Sensorträgers eingeklebt, daß die Indikatorschicht bzw. der aktive Bereich jeder Optode in der dem Probenkanal 4 zugewandten Fläche 16 des Sensorträgers 6 zu liegen kommt.

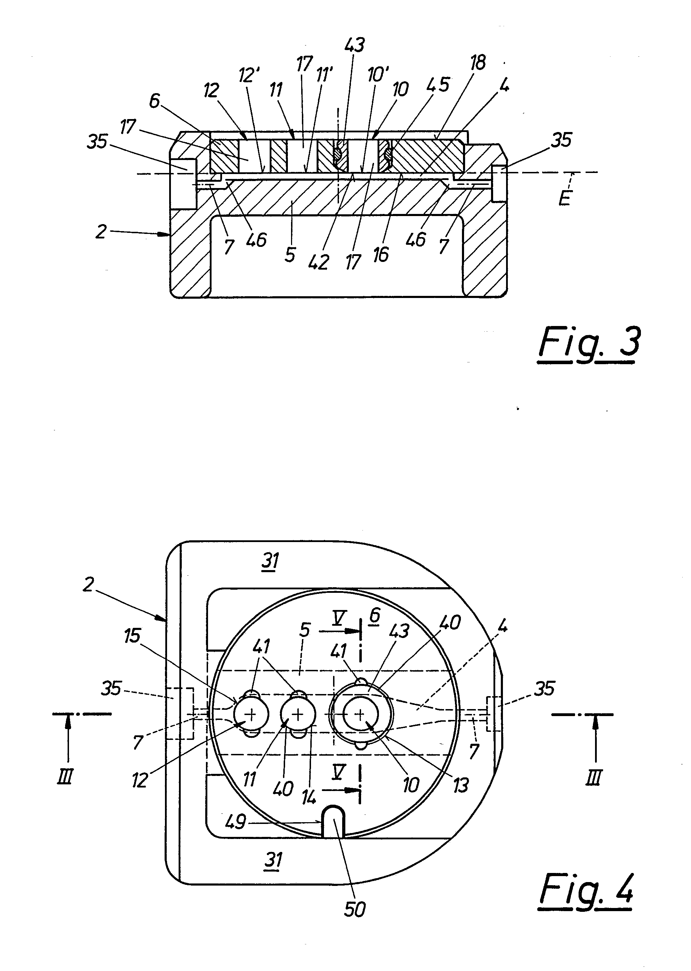

Jede der einzelnen Optoden 10, 11, 12 weist ein optisch durchlässiges Trägerelement 17 auf, welches mit der vom Probenkanal 4 abgewandten Fläche 18 des Sensorträgers 6 plan ab schließt (Siehe auch Fig. 3). Der Lichtleiterhalter 3, welcher pro Optode einen zweiarmigen Lichtleiter 19 aufweist, steht über eine plan geschliffene Platte 20 aus korrosionsfestem Material mit der probenabgewandten Fläche 18 des Sensorträgers in Kontakt, wobei jedem der statistisch vermischten gemeinsamen Enden 21 der zweiarmigen Lichtleiter 19 eines der optisch durchlässigen Trägerelemente 17 der Optoden 10, 11 und 12 achsparallel zugeordnet ist.

Eine in einem an der Halterung 1 befestigten Gehäuse 22 angeordnete Lichtleiterhülse 23 des Lichtleiterhalters 3, welche die einzelnen zweiarmigen Lichtleiter 19 in einer Vergußmasse aufnimmt, wird durch die Kraft einer sich am Gehäuse 22 abstützenden Feder 24 mit der frontseitig angeordneten Platte 20 mit konstantem Druck gegen den Sensorträger 6 gepreßt. Zur exakten Thermostatisierung der Vorrichtung weist der Lichtleiterhalter 3 zwei Heizelemente 25 und ein zentral angeordnetes Thermoelement 26 auf, deren elektrische Versorgungs- und Signalleitungen hier nicht weiter dargestellt sind.

Die Halterung 1 weist ein verschiebbares, mit einer Feder 27 belastetes Anschlußelement 28 auf, welches mit der Probenableitung 9 in Verbindung steht und den Meßkammerteil 2 nach dem Einsetzen in die Halterung 1 zentrierend an ein mit der Probenzufuhr 8 verbundenes Anschlußelement 29 preßt. Zwischen den Anschlußelementen 28, 29 und den an den Probenkanal 4 anschließenden Kapillarbohrungen 7 sind in Ausnehmungen des Meßkammerteils 2 Dichtelement 30, z.B. O-Ringe, angeordnet.

Wie aus Fig. 2 ersichtlich sind links und rechts vom Griffteil 31 des Meßkammerteils 2 Griffmulden 32 angeordnet, welche die Handhabung des Meßkammerteils beim Wechseln erleichtern. Das federbelastete Anschlußelement 28 kann durch Betätigung eines Druckhebels 33 vom Meßkammerteil 2 weggedrückt werden, wodurch die in der Ausnehmung 35 für das Dichtelement 30 einrastende Zentriernase 34 des Anschlußelementes 28 den Meßkammerteil 2 freigibt, welcher sodann entnommen werden kann.

Zur Ausleuchtung des Probenkanals 4 bzw. Beleuchtung des gesamten aus einem optisch durchlässigen Material bestehenden Meßkammerteils 2, ist in der Halterung 1 ein Lichtleiter 36 vorgesehen, welcher über einen Spiegel 37 Licht einer hier nicht weiter dargestellten Quelle zuführt.

Weiters sind in Fig. 1 schematisch Einrichtungen 38, 39 zur optischen Anregung der Indikatorschichten der einzelnen Optoden sowie zur Erfassung und Auswertung der optischen Signale dargestellt.

Aus den Fig. 3 und 4 ist der Meßkammerteil 2 mit dem eingeklebten Sensorträger 6 im Detail ersichtlich. Der Probenkanal 4 ist hier im wesentlichen als kapillarförmiger Spalt ausgebildet, welcher die Indikatorschichten 10', 11', 12' der Optoden 10, 11, 12 vollständig abdeckt und eine bestimmte, später noch ausführlich zu beschreibende strömungsgünstige Form aufweist. Die an den Probenkanal 4 anschließenden Kapillarbohrungen 7 liegen außerhalb der Ebene E des kapillarförmigen Spaltes und sind mit diesem, wie insbesondere in Fig. 3 ersichtlich, über Stichbohrungen 46 verbunden. Durch diese Anordnung wird ein Verkleben der Zuleitungen beim Einkleben des Sensorträgers 6 in den Meßkammerteil 2 verhindert.

Geeignete formschlüssige Elemente, wie z.B. eine Nut 49 im Sensorträger 6, sowie ein entsprechend geformter Ansatz 50 am Griffteil 31 des Meßkammerteiles, erleichtern die genaue Ausrichtung der einzelnen Optoden zum Probenkanal 4.

Zwischen den optisch durchlässigen Trägerelementen 17 der einzelnen Optoden und der Wand der Bohrungen 13, 14, 15 befinden sich Kapillarspalte 40, in welchen der Kleber über knapp vor der dem Probenkanal zugewandten Fläche 16 des Sensorträgers 6 endende nutförmige Erweiterung 41 am Rand jeder der Bohrungen 13, 14, 15 eingebracht wird. Die nur im Kapillarspalt 40 wirkenden Kapillarkräfte stoppen den Kleber an den beiden Deckflächen 16 und 18 des Sensorträgers und verhindern die Verunreinigung der Indikatorschichten 10', 11' und 12' der einzelnen Optoden.

Die proteinimpermeable Membran 42, welche den aktiven Bereich der pH-Optode abdeckt, wird - um eine Volumsänderung der Membran zuzulassen - auf einer das optisch durchlässige Trägerelement 17 umfassenden Hülse 43 elastisch fixiert. Dazu weist die Hülse 43, welche vorzugsweise aus einem Kunststoff mit Memory-Effekt besteht und auf das Trägerelement 17 aufgeschrumpft wird, eine Umfangsnut mit einer Fixierung 45 (O-Ring) auf.

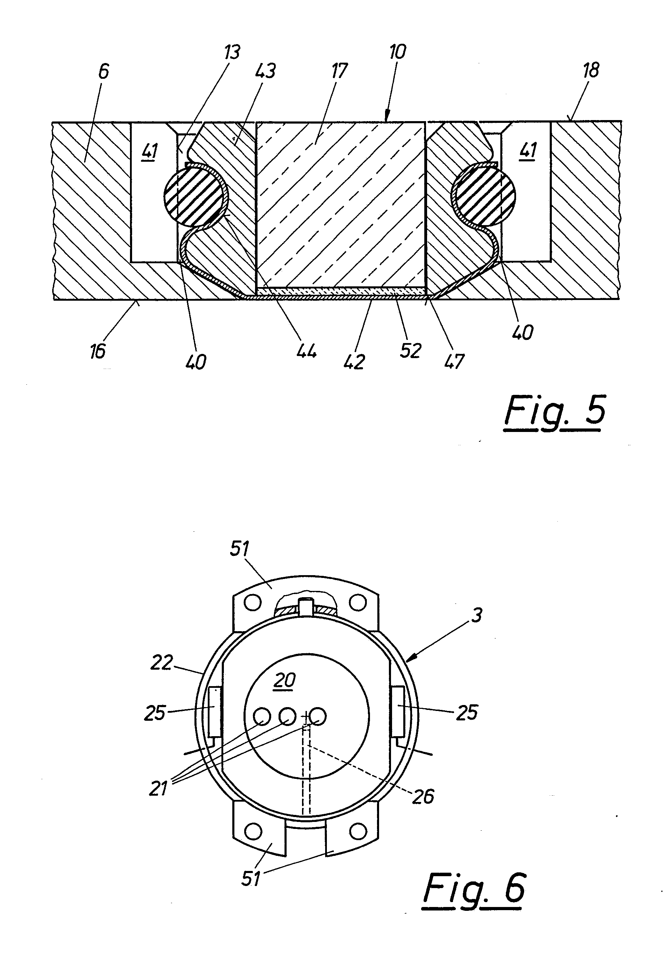

Zur Herstellung der pH-Optode ist folgendes zu sagen: Aus einem Kunststoff mit Memory-Effekt wird eine Hülse 43 hergestellt, welche einen Innendurchmesser aufweist, der um einige zehntel Millimeter kleiner ist als der Außendurchmesser des optisch durchlässigen Trägerelementes 17. Die exakte Formgebung der Kunststoffhülse 43 mit der Umfangsnut 44 ist aus der Fig. 5, welche einen Schnitt durch den Sensorträger 6 entlang der Linie V-V in Fig. 4 darstellt, ersichtlich.

In einem ersten Schritt wird nun die Kunststoffhülse 43 bei einer Temperatur von 100 bis 110° gelagert und sodann mit einem Dorn aus Metall auf einen Durchmesser aufgeweitet, welcher geringfügig größer ist als der Außendurchmesser des Trägerelementes 17. Danach wird rasch auf Zimmertemperatur abgekühlt und der Aufweitdorn aus der Kunststoffhülse entfernt, welche nun unter diesen Temperaturbedingungen ihr Übermaß behält.

In einem weiteren Schritt wird auf die Innenseite der Hülse 43 in einer dünnen Schicht ein Kunststoff mit niedrigem optischen Brechungsindex aufgebracht, sodaß zusammen mit dem Trägerelement mit einem höheren Brechungsindex ein optischer Lichtleiter gebildet wird. Die Schichtstärke dieses Cladding genannten niedrig brechenden Kunststoffes soll zwischen 10 und 50μm liegen.

Im nächsten Schritt wird das Trägerelementes des pH-Sensors mit der Indikatorschicht 52 so in die Kunststoffhülse 43 eingelegt, daß seine Stirnfläche in einer Ebene mit der Stirnseite 47 der Hülse 43 zu liegen kommt. Die Kunststoffhülse 43 mit exakt eingepaßter pH-Optode wird in einem weiteren Schritt auf eine Temperatur von 100° bis 120° gebracht. Unter dieser thermischen Behandlung beginnt nun die Kunststoffhülse 43 an ihrer Umfangsnut 44 zuerst auf das Trägerelement 17 aufzuschrumpfen und verdrängt in weiterer Folge durch weiteres Aufschrumpfen nach beiden Richtungen sämtliche Luft- und sonstige Gasblasen aus dem Zwischenraum zwischen Kunststoffhülse 43 und Trägerelement 17.

Die O₂-Optode wird beispielsweise folgermaßen hergestellt. Eine Mischung aus Indikatorsubstanz und Silicon wird auf das Zentrum eines Trägerelementes 17, beispielsweise eines Glaszylinders, aufgebracht. Der Glaszylinder mit dem Silicontropfen wird unter eine schwarz pigmentierte und klebefähige Teflonfolie positioniert und auf Kontakt angedrückt. Dabei können gleichzeitig mehrere Glaszylinder in mehreren Reihen auf eine Folie geklebt werden. Die durchschnittliche erschütterungsfreie Stehzeit zur gleichmäßigen Verteilung der Siliconschicht auf der Zylinderstirnfläche beträgt mehrere Stunden. Danach wird für mindestens eine Stunde bei 50° C bis 80° C polymerisiert. Nach der Aushärtephase wird die Teflonfolie mit den aufgeklebten Zylindern auf eine Stanzunterlage gelegt. Ein Stanzeisen mit eingebauter Buchse als Aufnahme und Führung für den Glaszylinder wird über den Zylinder gestülpt. Mit leichtem Druck des Stanzeisens wird die Teflonfolie im gewünschten Durchmesser durchstanzt.

Zur Herstellung der $CO_2$-Optode werden geeignete Glaszylinder durch eine Säuremischung ($HNO_3$ und $H_2SO_4$ im Verhältnis 1:1) aktiviert. Danach wird die Säuremischung abgegossen und die Zylinder mit destilliertem Wasser gewaschen und abgetrocknet. Die so gereinigten und aktivierten Zylinder werden in einer Trockenpistole über 100 °C über Phosphorpentoxyd getrocknet. Danach werden die Glaszylinder für mehrere Stunden in trockenes Trichlorvinylsilan eingelegt und anschließend mit reinstem Toluol gewaschen.

Zur optischen Isolierung der $CO_2$-Optode wird eine pigmentierte Siliconschicht folgendermaßen hergestellt. Eine Komponente eines Zweikomponentensiliconkautschukes wird mit Eisenoxyd pigmentiert, die zweite Komponente in der vorgeschriebenen Konzentration zugesetzt und diese Mischung mittels Siebdruck auf eine Teflonschicht aufgetragen. Anschließend wird die pigmentierte Siliconschicht bei 50 °C bis 80 °C polymerisiert.

Als Indikatorsubstanz wird beispielsweise Hydroxypyrentrisulfonsäure verwendet, dazu wird ein geeignetes Puffersystem zur Einstellung des richtigen pH-Wertes gewählt. Als Hilfsstoffe können Polyzucker und biozide Materialien eingesetzt werden. Alle diese Komponenten werden in einer wäßrigen Phase vorgelegt und mit der einen Komponente eines Zweikomponentensiliconkautschukes innig verrührt. Die dabei erzielten Tröpfchengrößen der wäßrigen Phase bewegen sich im Bereich von 0,1 bis 100 µm. Die Indikatorlösung wird nun mit der zweiten Komponente des Siliconkautschukes innig vermengt, und mittels Siebdruck auf die wie oben beschrieben hergestellte pigmentierte Siliconschicht aufgetragen. Die Polymerisation erfolgt bei 40 bis 80 °C.

Auf die säureaktivierten und mit Trichlorvinylsilan versehenen Glaszylinder wird eine sehr kleine Menge eines Zweikomponentensilikonkautschukes aufgebracht und an die Indikatorschicht der oben beschriebenen Folie (Teflon + pigmentiertes Silicon + Indikator/Silicon) angeheftet. Die Polymerisation erfolgt mehrere Stunden bei 20 °C bis 40 °C, anschließend zumindest eine Stunde bei 50 °C bis 80 °C.

Das Ausstanzen der einzelnen $CO_2$-Optoden erfolgt im wesentlichen wie bei der $O_2$-Optode beschrieben.

Die einzelnen Optoden 10, 11 und 12 werden mit einen schwarz pigmentierten Zweikomponenten-Klebstoff in die Bohrungen 13, 14 und 15 des Sensorträgers 6 eingeklebt. Wie in Fig. 5 anhand der pH-Optode 10 gezeigt, werden die Optoden dazu vorsichtig in die entsprechenden Bohrungen 13, 14, 15 eingesetzt und mittels Federn an ein plan an der Fläche 16 des Sensorträgers 6 anliegendes Widerlager gedrückt. Der pigmentierte Klebstoff wird dann über die seitlichen nutförmigen Erweiterungen 41 eingefüllt und fließt infolge der Kapillarkräfte durch sämtliche Klebespalte.

Die in Fig. 6 dargestellte Draufsicht auf den abgenommenen Lichtleiterhalter 3 zeigt seitlich am Gehäuse 22 angeformte Befestigungslaschen 51 zur Fixierung der Lichtleiterhalterung an der Halterung des Meßkammerteils. Ebenfalls ersichtlich sind die Enden 21 der zweiarmigen Lichtleiter sowie die beiden Heizelemente 25 und das zentral in der geschliffenen Platte 20 angeordnete Thermoelement 26.

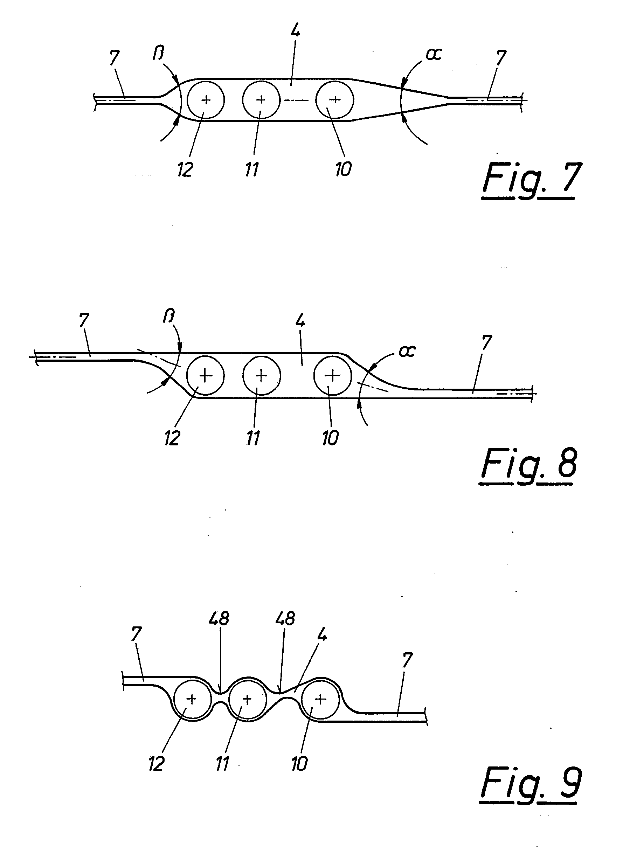

In den Fig. 7 bis 9 sind besondere äußere Formen des als Kapillarspalt ausgeführten Probenkanals 4 dargestellt.

Die in Fig. 7 dargestellte symmetrische Ausführung weist einen Einströmöffnungenwinkel $\alpha$ von 20° und einen Ausströmöffnungswinkel $\beta$ von 60° auf. Je nach Art des Probenmediums sind auch andere Winkel zwischen 10° und 60° für den Einströmöffnungswinkel $\alpha$ und zwischen 10° und 90° für den Ausströmöffnungswinkel $\beta$ denkbar.

In der Ausführung nach Fig. 8 erfolgt die Anströmung der einzelnen Optoden 10, 11, 12 asymmetrisch, in Fig. 9 befinden sich zwischen den einzelnen Optoden 10, 11 und 12 Einschnürungen 48, welche das Meßvolumen weiter verkleinern.

## Ansprüche

1. Vorrichtung zur Messung chemischer und physikalischer Parameter eines flüssigen oder gasförmigen Mediums mit zumindest einem mit dem Medium in Kontakt stehenden optischen Sensorelement (Optode), mit Einrichtungen zur optischen Anregung der Indikatorschicht der Optode sowie zur Erfassung und Auswertung der von den zu messenden Parametern abhängigen optischen Signale, dadurch gekennzeichnet, daß ein in eine Halterung (1) der Vorrichtung einsetzbarer Meßkammerteil (2) mit einem Probenkanal (4) vorgesehen ist, welcher über Kapillarbohrungen (7) an Probenzu- und Ableitungen (8, 9) ankoppelbar ist, daß der Meßkammerteil (2) einen den Probenkanal (4) an einer Seite begrenzenden Sensorträger (6) aufnimmt, welcher Bohrungen (13, 14, 15) zur Aufnahme der Optoden (10, 11, 12) aufweist, sowie daß die Indikatorschichte jeder einzelnen Optode (10,11,12) in der dem Probenkanal (4) zugewandten Fläche (16) des Sensorträgers (6) liegt.

2. Vorrichtung nach Anspruch 1, dadurch gekennzeichnet, daß die einzelnen Optoden (10,11,12) in den Bohrungen (13, 14,15) des Sensorträgers (6) angeordnete, optisch durchlässige Trägerelemente (17) aufweisen, welche mit der vom Probenkanal (4) abgewandten Fläche (18) des Sensorträgers (6) plan abschließen, sowie daß ein Lichtleiterhalter (3) vorgesehen ist, welcher optische Anschlüsse, vorzugsweise zweiarmige Lichtleiter (19), für jede Optode (10,11,12) aufweist, wobei die Enden (21) der Lichtleiter (19) in einer mit dem Sensorträger (6) in Kontakt bringbaren plan geschliffenen Platte (20) liegen.

3. Vorrichtung nach Anspruch 1 oder 2, dadurch gekennzeichnet, daß die Halterung (1) ein mit der Probenableitung (9) in Verbindung stehendes federbelastetes Anschlußelement (28) aufweist, welches den Meßkammerteil (2) zentrie rend an ein mit der Probenzuleitung (8) verbundenes Anschlußelement (29) preßt, wobei zwischen den Anschlußelementen (28,29) und den mit dem Probenkanal (4) verbundenen Kapillarbohrungen (7) Dichtelemente angeordnet sind und das federbelastete Anschlußelement (28) eine Druckhebel (33) zu dessen Entriegelung aufweist.

4. Vorrichtung nach einem der Ansprüche 1 bis 3, dadurch gekennzeichnet, daß der Sensorträger (6) aus einer korrosionsfesten Metallscheibe, vorzugsweise aus einer eloxierten Aluminiumscheibe, besteht, bei welcher die Bohrungen (13,14,15) für die Optoden (10,11,12) entlang des Durchmessers der Metallscheibe aufgereiht sind und die Optoden (10,11,12). vorzugsweise zur Messung des pH-, des pO₂- sowie des pCO₂-Wertes, in diese Bohrungen (13.14.15) eingeklebt sind.

5. Vorrichtung nach Anspruch 4, dadurch gekennzeichnet, daß zwischen den einzelnen Optoden (10,11,12) und den Bohrungen (13,14,15) im Sensorträger (6) ein mit Kleber zu füllender Kapillarspalt (40) ausgebildet ist, wobei zum Einbringen des Klebers am Rand jeder Bohrung (13,14,15) zumindest eine knapp vor der dem Probenkanal (4) zugewandten Fläche (16) des Sensorträgers (6) endende nutförmige Erweiterung (41) vorgesehen ist.

6. Vorrichtung nach Anspruch 4, dadurch gekennzeichnet, daß die pH-Optode (10) eine das optisch durchlässige Trägerelement (17) umfassende Hülse (43) aufweist, welche in einer Umfangsnut (44) eine elastische Fixierung (45) für eine den aktiven Bereich der pH-Optode abdeckende, proteinimpermeable Membran (42), vorzugsweise aus regenerierter Cellulose, trägt, sowie daß der Kapillarspalt (40) zwischen Hülse (43) und Bohrung (13) im Sensorträger (6) mit Kleber gefüllt ist.

7. Vorrichtung nach Anspruch 6, dadurch gekennzeichnet, daß die Hülse (43) aus Kunststoff, vorzugsweise aus einem Kunststoff mit Memory-Effekt besteht, welcher auf das optisch durchlässige Trägerelement (17) aufgeschrumpft ist.

8. Vorrichtung nach Anspruch 7, dadurch gekennzeichnet, daß die Hülse (43) auf der dem Trägerelement (17) zugewandten Mantelfläche mit einer dünnen Schicht bedeckt ist, deren Brechungsindex niedriger ist als jener des Trägerelementes (17).

9. Vorrichtung nach einem der Ansprüche 1 bis 8, dadurch gekennzeichnet, daß der Meßkammerteil (2) aus optisch durchlässigem Material, vorzugsweise aus Plexiglas, besteht, sowie daß ein in der Halterung (1) des Meßkammerteils (2) geführter Lichtleiter (36) zur Ausleuchtung des Probenkanals (4) vorgesehen ist.

10. Vorrichtung nach Anspruch 2, dadurch gekennzeichnet, daß der Lichtleiterhalter (3) zumindest ein Heizelement (25) und ein Thermoelement (26) zur Thermostatisierung des mit dem Lichtleiterhalter (3) in Kontakt stehenden Sensorträgers (6) aufweist.

11. Vorrichtung nach Anspruch 10, dadurch gekennzeichnet, daß der Lichtleiterhalter (3) eine in einem Gehäuse (22) geführte Lichtleiterhülse (23) zur Aufnahme der einzelnen Lichtleiter (19) aufweist, welche an ihrer Stirnseite die mit dem Sensorträger (6) in Kontakt bringbare plan geschliffene Platte (20) aufweist, wobei die Lichtleiterhülse (23) durch die Kraft einer sich am Gehäuse (22) abstützenden Feder (24) mit konstantem Druck am Sensorträger (6) anliegt.

12. Vorrichtung nach einem der Ansprüche 1 bis 11, dadurch gekennzeichnet, daß der Probenkanal (4) im Meßkammerteil (2) als kapillarförmiger Spalt ausgebildet ist, welcher die Indikatorschicht (10′,11′,12′) jeder einzelnen Optode (10,11,12) vollständig abdeckt, sowie daß die an den Probenkanal (4) anschließenden Kapillarbohrungen (7) außerhalb der Ebene (E) des kapillarförmigen Spaltes liegen und mit diesem über kurze Stichbohrungen ((46) verbunden sind.

13. Vorrichtung nach Anspruch 12, dadurch gekennzeichnet, daß der in der Spaltebene liegende Einströmöffnungswinkel α des kapillarförmigen Spaltes zwischen 10° und 60°, vorzugsweise zwischen 15° bis 25° und der Ausströmöffnungswinkel β zwischen 10° und 90°, vorzugsweise zwischen 30° und 60° liegt.

14. Vorrichtung nach Anspruch 12 oder 13, dadurch gekennzeichnet, daß der kapillarförmige Spalt zwischen den einzelnen Optoden (10,11,12) Einschnürungen (48) in seiner Breite aufweist.

15. Vorrichtung nach einem der Ansprüche 12 bis 14, dadurch gekennzeichnet, daß die Anströmung der einzelnen Optoden (10,11,12) asymmetrisch erfolgt.

16. Vorrichtung nach Anspruch 12, dadurch gekennzeichnet, daß der Sensorträger (6) in den Meßkammerteil (2) eingeklebt ist.

_Fig.1_

_Fig.2_

*Fig. 3*

*Fig. 4*

_Fig. 5_

_Fig. 6_

_Fig. 7_

_Fig. 8_

_Fig. 9_